# EUROPEAN PATENT SPECIFICATION

(11) **EP 4 106 456 B1**
(45) Date of publication and mention of the grant of the patent: **10.12.2025**
(21) Application number: 21753961.8
(22) Date of filing: 10.02.2021
(51) Int. Cl.: H04W 72/12, H04B 7/155, H04W 40/22

(54) **MULTIPLEXING SCHEDULING METHOD FOR IAB NETWORK AND IAB NODE**
MULTIPLEXING-PLANUNGSVERFAHREN FÜR IAB-NETZWERK UND IAB-KNOTEN
PROCÉDÉ DE PLANIFICATION DE MULTIPLEXAGE POUR RÉSEAU IAB ET NOEUD IAB

(30) Priority: 11.02.2020 CN 202010087407
(43) Date of publication of application: 21.12.2022
(73) Proprietor: Vivo Mobile Communication Co., Ltd., Dongguan, Guangdong 523863 (CN)
(72) Inventor: LIU, Jinhua, Dongguan, Guangdong 523863 (CN)
(74) Representative: Lavoix
(86) International application number: PCT/CN2021/076447
(87) International publication number: WO 2021/160150

(56) References cited:
- WO-A1-2019/144841
- CN-A- 108 934 030
- CN-A- 110 401 515
- CN-A- 110 536 406
- CN-A- 110 662 229
- QUALCOMM INCORPORATED: "Enhancements to support NR backhaul links", 3 November 2018 (2018-11-03), pages 1 - 21, XP051479739, Retrieved from the Internet <URL:http://www.3gpp.org/ftp/tsg%5Fran/WG1%5FRL1/TSGR1%5F95/Docs/R1%2D1813417%2Ezip>
- HUAWEI ET AL: "Physical layer enhancement on IAB", vol. RAN WG1, no. Sanya, China; 20180416 - 20180420, 15 April 2018 (2018-04-15), XP051425992, Retrieved from the Internet <URL:http://www.3gpp.org/ftp/Meetings%5F3GPP%5FSYNC/RAN1/Docs/> [retrieved on 20180415]
- SAMSUNG: "Resource Multiplexing between Backhaul and Access Links", vol. RAN WG1, no. Athens, Greece; 20190225 - 20190301, 15 February 2019 (2019-02-15), XP051599966, Retrieved from the Internet <URL:http://www.3gpp.org/ftp/tsg%5Fran/WG1%5FRL1/TSGR1%5F96/Docs/R1%2D1902271%2Ezip> [retrieved on 20190215]

## Description

### TECHNICAL FIELD

The present invention relates to the communications field, and in particular, to a multiplexing scheduling method for IAB network and an IAB node.

### BACKGROUND

At present, in a new radio (New Radio, NR) system, Integrated Access and Backhaul (Integrated Access and Backhaul, IAB) may provide extended coverage and enhanced capacity for NR cells. An access node that supports radio access of user equipment (User Equipment, UE, also referred to as a terminal device) and performs wireless backhaul of data is called an IAB node (IAB node, IABN). An access node that provides a wireless backhaul function for the IAB node to implement connection between the UE and a core network (Core Network, CN) is called a donor IAB node (donor IAB node). Wired transmission is performed between the donor IAB and core network. UE data is transmitted between the UE and an access node via a radio access link (access link), and UE data is transmitted between access nodes via a wireless backhaul link (backhaul link).

In an IAB network architecture that supports separated deployment of centralized units (Central Unit, CU) and distributed units (Distributed Unit, DU), an IAB node (IAB node, IABN) includes a DU function part and a mobile termination (Mobile Termination, MT) function part. Relying on the MT function part, an access node (that is, an IABN) may find an upstream access node (that is, a parent IABN, P-IABN) and establishes a wireless backhaul link to a DU of the upstream access node. After an IAB node has established a complete backhaul link, the IAB node starts its DU function and the DU provides cell services, that is, the DU may provide access services for UEs. A self-backhaul loop includes a donor IAB node. DUs of all IAB nodes in the self-backhaul loop may be connected to a CU node, that is, a CU function part of the donor IAB node.

In an IAB network, an across-hop (across hop) scheduling relationship based on spatial division multiplexing (Spatial Division Multiplexing, SDM), frequency division multiplexing (Frequency Division Multiplexing, FDM), or co-frequency co-time full duplex (Co-frequency Co-time Full Duplex, CCFD) may be implemented. However, whether multiplexing is applied affects parameters between two hops, such as transmission interference, power distribution, and time-sequence adjustment. Data transmission between two hops is scheduled by different nodes; as a result, schedulers of two scheduling nodes cannot predict parameters required for transmission scheduling, thereby degrading transmission performance.

QUALCOMM INCORPORATED: "Enhancements to support NR backhaul links", 3GPP DRAFT; R1-1813417, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 3 November 2018 (2018-11-03), pages 1-21, XP051479739, provides a summary of the main enhancements and modifications required to support NR-IAB.

### SUMMARY

One of the technical problems to be resolved by embodiments of the present invention is how to improve adaptive performance and transmission performance of wireless backhaul links. The invention is set out in the appended claims.

In the embodiments of the present invention, in a self-backhaul loop of an IAB network, in a case that the first IAB node for scheduling the first hop determines the pre-scheduling information between the first hop and the second hop, the first IAB node may perform multiplexing scheduling between the first hop and the second hop based on the activation signaling received from its parent IAB node, that is, the second IAB node. The first IAB node may perform multiplexing scheduling based on the pre-scheduling information. This not only enriches manners of activating multiplexing scheduling across hops in the IAB network, but also helps determine interference on reception of the first IAB node. In this way, scheduling parameters can be accurately determined to further accurately determine a power distribution status on IAB nodes, thereby improving adaptive performance of a radio backhaul link, reducing transmission latency, and improving spectrum efficiency.

### BRIEF DESCRIPTION OF DRAWINGS

The drawings described herein are used to provide a further understanding about the present invention, and constitute a part of the present invention. Exemplary embodiments of the present invention and descriptions thereof are used to explain the present invention, but do not constitute any inappropriate limitation on the present invention. In the accompanying drawings:
FIG. 1 is a schematic diagram of an across-hop multiplexing scheduling relationship in an IAB network according to an embodiment of the present invention;
FIG. 2 is a schematic flowchart of a multiplexing scheduling method for IAB network according to an embodiment of the present invention;
FIG. 3 is a schematic diagram of a manner of determining a starting time point of multiplexing scheduling according to an embodiment of the present invention;
FIG. 4 is a schematic diagram of another manner of determining a starting time point of multiplexing scheduling according to an embodiment of the present invention;
FIG. 5 is a schematic flowchart of another multiplexing scheduling method for IAB network according to an embodiment of the present invention;
FIG. 6 is a schematic structural diagram of a first IAB node according to an embodiment of the present invention;
FIG. 7 is a schematic structural diagram of a second IAB node according to an embodiment of the present invention;
FIG. 8 is a schematic structural diagram of another first IAB node according to an embodiment of the present invention; and
FIG. 9 is a schematic structural diagram of another second IAB node according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution/long term evolution advanced (Long Term Evolution advanced, LTE-A) system, and an NR system.

User equipment (UE), also referred to as a mobile terminal (Mobile Terminal), a mobile user device, or the like, may communicate with one or more core networks through a radio access network (Radio Access Network, RAN). The user equipment may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network.

A network device, also referred to as a base station, may be a base transceiver station (Base Transceiver Station, BTS) in GSM or CDMA, a NodeB (NodeB) in WCDMA, an evolved NodeB (evolved Node B, eNB or e-NodeB) in LTE, or a 5G base station (gNB).

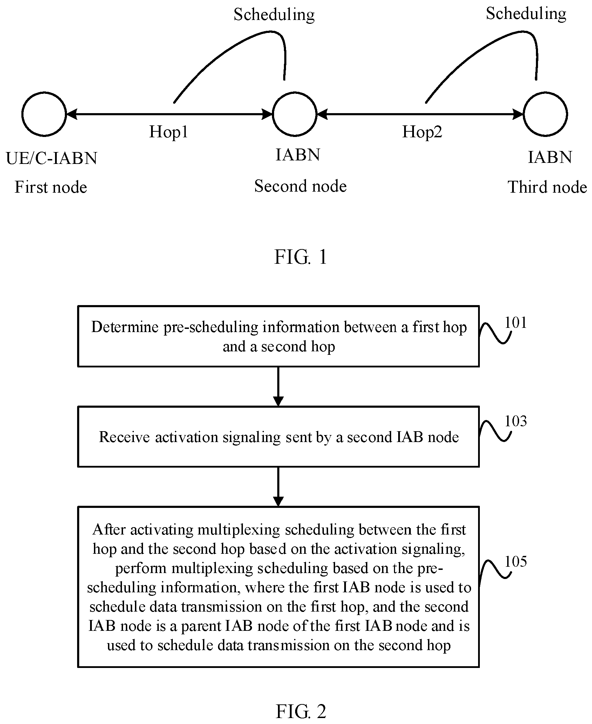

In the embodiments of the present invention, when SDM, FDM, or CCFD is used across hops in an IAB network, user equipment (User Equipment, UE, which may also be referred to as a terminal device) or a child IAB node (Child IAB Node, C-IABN, which may be referred to as a first node), a local IAB node (referred to as a second node or a first IAB node), and a parent IAB node (Parent IAB Node, P-IABN, which is referred to as a third node or a second IAB node) of the local IAB node are involved. Data transmission on hops is scheduled by different IAB nodes. That is, data transmission on Hop1 (that is, a first hop) between the first node and the second node is scheduled by the second node, that is, the first IAB node, and data transmission on Hop2 (that is, a second hop) between the second node and the third node is scheduled by the third node, that is, the second IAB node, as shown in FIG. 1.

In spatial division multiplexing (SDM), an IAB node receives a physical downlink shared channel (Physical Downlink Shared Channel, PDSCH) from its parent IAB node and receives a physical uplink shared channel (Physical Downlink Shared Channel, PDSCH) from its child IAB node or UE at the same time on the same time-frequency resource, or an IAB node sends a PUSCH to its parent IAB node and sends a PDSCH to its child IAB node or UE at the same time on the same time-frequency resource.

In frequency division multiplexing (FDM), an IAB node receives a PDSCH from its parent IAB node and receives a PUSCH from its child IAB node or UE at the same time on different frequency resources, or an IAB node sends a PUSCH to its parent IAB node and sends a PDSCH to its child IAB node or UE at the same time on different frequency resources.

In co-frequency co-time full duplex, an IAB node receives a PDSCH from its parent IAB node and sends a PDSCH to its child IAB node or UE at the same time on the same time-frequency resource, or an IAB node sends a PUSCH to its parent IAB node and receives a PUSCH from its child IAB node or UE at the same time on the same time-frequency resource. Multiple panel transmission reception (Multiple Panel Transmission Reception, MPTR) is a technology in which an IAB node uses different antenna modules (panel) to perform transmission and reception. For example, the IAB node has two antenna modules, one module used for receiving while the other module used for sending. A high degree of isolation may be present between MPTR transceiver antenna modules, which may reduce an interference of sending on receiving to some extent.

However, whether multiplexing is applied affects parameters between two hops, such as transmission interference, power distribution, and time-sequence adjustment. In a case that data transmission between two hops is scheduled by different nodes, schedulers of two scheduling nodes may be unable to predict parameters required for transmission scheduling (such as interference, power distribution, and time sequence adjustment). Referring to FIG. 1, specifically, when a first IAB node schedules data transmission on Hop1, the first IAB node is not aware whether a second IAB node has scheduled data transmission on Hop2 and its scheduling parameters. Likewise, when the second IAB node schedules data transmission on Hop2, the second IAB node is neither aware whether the first IAB node has scheduled data transmission on Hop1 and its scheduling parameters. The scheduling parameters may include information such as a time-frequency resource, a demodulation reference signal (Demodulation Reference Signal, DMRS), a modulation and coding scheme (Modulation and Coding scheme, MCS), a rank (RANK), and RVI. In this case, at least an issue described in (1) and (2) may occur.
(1) Interference on reception of the first IAB node cannot be determined. For example, for the MPTR technology, if the first IAB node has both Hop1 uplink receive (ULRX) and Hop2 uplink transmit (ULTX), Hop1 ULRX may be heavily interfered and requires conservative scheduling. If only Hop1 ULRX is available, conservative scheduling (for example, backward scheduling based on an additional signal-to-noise and interference ratio (Signal-to-Noise and Interference Ratio, SINR)) is not required, and normal scheduling is sufficient. If the first IAB node is not aware whether Hop2 ULTX has been performed, the first IAB node cannot accurately predict interference on Hop1 ULRX and therefore cannot accurately determine scheduling parameters, which degrades transmission performance.
(2) A power distribution status of the first IAB node cannot be determined. For example, for SDMTX, if the first IAB node has both Hop1 downlink transmit (DL TX) and Hop2 ULTX, and the first IAB node has only a transmit radio frequency (RF) channel, a total transmit power of the first IAB node shall be distributed between Hop1 DLTX and Hop2 ULTX; if the first IAB node has only Hop1 DLTX or Hop2 ULTX, all transmit power may be used for Hop1 DLTX or Hop2 ULTX. If the first IAB node and the second IAB node are unaware of scheduling of each other, they cannot determine available transmit power.

Therefore, to resolve the foregoing issue, the multiplexing scheduling solution for IAB network in the embodiments of the present invention is proposed.

The technical solutions provided by the embodiments of the present invention are hereinafter described in detail with reference to accompanying drawings.

Referring to FIG. 2, an embodiment of the present invention provides a multiplexing scheduling method for IAB network that is executed by a first IAB node in an IAB network. The method includes the following steps.

Step 101: Determine pre-scheduling information between a first hop and a second hop.

The pre-scheduling information includes at least multiplexing resource information and a multiplexing manner.

The multiplexing resource information includes at least one of the following:
a time length for using multiplexing scheduling; a frequency range for using multiplexing scheduling; and a starting time point of multiplexing scheduling.

Optionally, in the multiplexing scheduling method for IAB network according to this embodiment of the present invention, the pre-scheduling information may further include power control information. The power control information may include a power offset, a maximum power of an MT of the first IAB node, a maximum power of a DU of the first IAB node, and the like, which helps accurately determine a power distribution status on the IAB node.

Optionally, the multiplexing manner may include one of the following (1) to (6).
(1) Spatial division multiplexing-based transmit SDM TX multiplexing. That is, both Hop1 DLTX (that is, DLTX on the first hop) and Hop2 ULTX (that ULTX on the second hop) are available. In this case, power distribution of the first IAB node between two hops is considered for scheduling of two IAB nodes.
(2) Spatial division multiplexing-based receive SDM RX multiplexing. That is, both Hop1 ULRX and Hop2 DLRX are available. In this case, interference of the first IAB node between two hops is considered for scheduling of two IAB nodes.
(3) Frequency division multiplexing-based transmit FDM TX multiplexing. That is, one part of frequency is used for Hop1 DLTX and the other part of frequency is used for Hop2 ULTX. In this case, frequency distribution between two hops is considered for scheduling of two IAB nodes.
(4) Frequency division multiplexing-based receive FDM RX multiplexing. That is, one part of frequency is used for Hop1 ULRX and the other part of frequency is used for Hop2 DLRX. In this case, frequency distribution between two hops is considered for scheduling of two IAB nodes.
(5) Uplink transmit and receive multiplexing based on co-frequency co-time full duplex CCFD, such as MPTR UL. That is, both Hop1 ULRX and Hop2 ULTX are available. In this case, interference of Hop2 ULTX on Hop1 ULRX is considered for scheduling of two IAB nodes.
(6) Downlink transmit and receive multiplexing based on co-frequency co-time full duplex CCFD, such as MPTR DL. That is, both Hop1 DLTX and Hop2 DL RX are available. In this case, interference of Hop1 DLTX on Hop2 ULRX is considered for scheduling of two IAB nodes.

Step 103: Receive activation signaling sent by a second IAB node.

Optionally, the activation signaling may be carried by one of the following: a physical downlink control channel (Physical Downlink Control Channel, PDCCH); a medium access control control element (Medium Access Control Control Element, MAC CE); and a backhaul adaptation protocol control protocol data unit (Backhaul Adaptation Protocol control Protocol Data Unit, BAP control PDU).

Step 105: After activating multiplexing scheduling between the first hop and the second hop based on the activation signaling, perform multiplexing scheduling based on the pre-scheduling information, where the first IAB node is used to schedule data transmission on the first hop, and the second IAB node is a parent IAB node of the first IAB node and is used to schedule data transmission on the second hop.

In other words, the first IAB node may schedule data transmission on the first hop on a preconfigured time-frequency resource in a configured multiplexing manner between a previous hop and a next hop (that is, the first hop and the second hop).

In this embodiment of the present invention, in a self-backhaul loop of an IAB network, in a case that the first IAB node for scheduling the first hop determines the pre-scheduling information between the first hop and the second hop, the first IAB node may perform multiplexing scheduling between the first hop and the second hop based on the activation signaling received from its parent IAB node, that is, the second IAB node. The first IAB node may perform multiplexing scheduling based on the pre-scheduling information. This not only enriches manners of activating multiplexing scheduling across hops in the IAB network, but also helps determine interference on reception of the first IAB node. In this way, scheduling parameters can be accurately determined to further accurately determine a power distribution status on IAB nodes, thereby improving adaptive performance of a radio backhaul link, reducing transmission latency, and improving spectrum efficiency.

Optionally, in step 101 of the multiplexing scheduling method for IAB network in this embodiment of the present invention, the pre-scheduling information may be determined in different manners, including but not limited to the following specific embodiments:

### Specific embodiment 1

In the specific embodiment 1, step 101 is executed as follows: obtaining the pre-scheduling information determined by the second IAB node.

It may be understood that the pre-scheduling information used for multiplexing scheduling between the first hop and the second hop is configured by the parent IAB node of the first IAB node, which is the second IAB node.

Optionally, in the specific embodiment 1, the pre-scheduling information is carried by one of the following: a PDCCH, a MAC CE, and a BAP control PDU.

In the specific embodiment 1, if multiplexing resource information in the pre-scheduling information includes a starting time point of multiplexing scheduling, the starting time point of multiplexing scheduling is determined based on one of the following (1) to (3):

### (1) A receiving time of a PDCCH, a MAC CE, or a BAP control PDU.

In other words, the starting time point of multiplexing scheduling corresponds to the receiving time of the PDCCH, the MAC CE, or the BAP control PDU, and optionally, corresponds to a starting or ending time point of a slot (Slot) in which the PDCCH, MAC CE, or BAP control PDU is located.

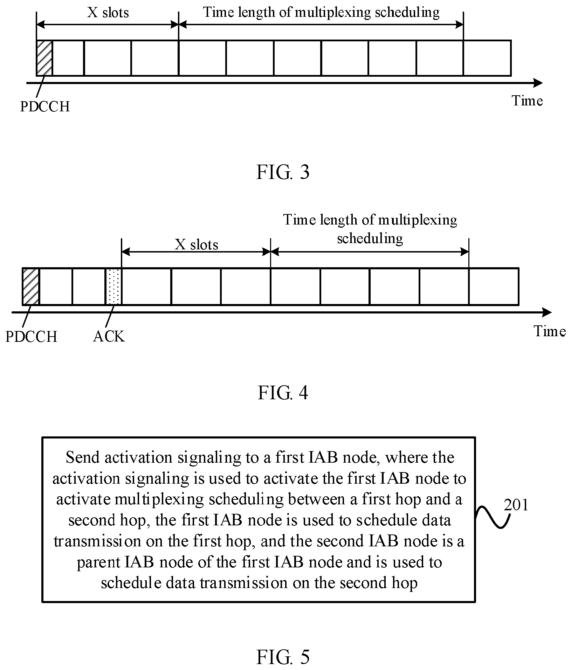

For example, referring to FIG. 3, multiplexing scheduling between the first hop and the second hop takes effect in X slots after PDCCH reception, that is, multiplexing scheduling starts at a time that is X slots after PDCCH reception.

### (2) A sending time of an acknowledgement signal corresponding to reception of thee PDCCH, the MAC CE, or the BAP control PDU.

In other words, the starting time point of multiplexing scheduling corresponds to the sending time of an acknowledgement signal corresponding to reception of the PDCCH, MAC CE, or BAP control PDU, and optionally, corresponds to a ending time point of a slot in which the sending time of the acknowledgement signal is located.

For example, referring to FIG. 4, multiplexing scheduling between the first hop and the second hop takes effect in X slots after sending of the acknowledgement signal (ACK), that is, multiplexing scheduling starts at a time that is X slots after the sending time of the acknowledgement signal.

### (3) Indication information carried by the PDCCH, the MAC CE, or the BAP control PDU.

The starting time point of multiplexing scheduling is determined based on indication displayed on carried by the PDCCH, the MAC CE, or the BAP control PDU.

For example, the multiplexing scheduling based on the indication of the PDCCH is activated in X slots after PDCCH reception.

### Specific embodiment 2

In the specific embodiment 2, step 101 may be executed as follows: obtain the pre-scheduling information configured by a centralized unit (CU).

It may be understood that the pre-scheduling information used for multiplexing scheduling between the first hop and the second hop is configured by the CU in the self-backhaul loop.

Optionally, in the specific embodiment 2, the pre-scheduling information is carried by one of the following: radio resource control (Radio Resource Control, RRC) signaling or F1AP (F1 Application Protocol) signaling. The centralized unit (CU) may configure a DU function part of the IAB node according to the F1-AP protocol and configure an MT part of the IAB node according to an RRC protocol.

Optionally, the multiplexing scheduling method for IAB network in this embodiment of the present invention may further include an operation of deactivating the multiplexing scheduling between the first hop and the second hop. After the multiplexing scheduling is deactivated, multiplexing scheduling is no longer performed for the first IAB node and the second IAB node. The deactivation operation is described with reference to the following specific embodiments. It should be noted that specific embodiments include but are not limited to the following specific embodiments.

### Specific embodiment 1

In the specific embodiment 1, the multiplexing scheduling method for IAB network according to this embodiment of the present invention may further include: receiving deactivation signaling sent by the second IAB node, where the deactivation signaling is used to indicate deactivating the multiplexing scheduling.

It may be understood that the first IAB node deactivates the multiplexing scheduling based on the deactivation signaling sent by the second IAB node.

Optionally, in the specific embodiment 1, the deactivation signaling is carried by one of the following: a physical downlink control channel PDCCH, a medium access control control element MAC CE, and a BAP control PDU.

### Specific embodiment 2

In the specific embodiment 2, the multiplexing scheduling method for IAB network according to this embodiment of the present invention may further include: determining, based on received target scheduling information of the second IAB node on the second hop, whether to deactivate the multiplexing scheduling.

It may be understood that the first IAB node determines, based on a received scheduling status of the second IAB node on the second hop, whether to deactivate the multiplexing scheduling. The target scheduling information is used to reflect the scheduling status of the second IAB node on the second hop. Optionally, the target scheduling information includes duration of data transmission of the second IAB node on an unscheduled multiplexing resource on the second hop. In an example, the MT of the first IAB node starts a timer after each transmit (or receive) scheduled by the second IAB node on the multiplexing resource. If the timer expires, the first IAB node determines to deactivate the multiplexing scheduling.

### Specific embodiment 3

In the specific embodiment 3, the multiplexing scheduling in the multiplexing scheduling method for IAB network according to this embodiment of the present invention is deactivated after bandwidth part (Bandwidth Part, BWP) switching.

It may be understood that the first IAB node may implement autonomous deactivation of the multiplexing scheduling after BWP switching.

Referring to FIG. 5, an embodiment of the present invention provides a multiplexing scheduling method for IAB network that is executed by a second IAB node in an IAB network. The method includes the following steps.

Step 201: Send activation signaling to a first IAB node, where the activation signaling is used to activate the first IAB node to activate multiplexing scheduling between a first hop and a second hop, the first IAB node is used to schedule data transmission on the first hop, and the second IAB node is a parent IAB node of the first IAB node and is used to schedule data transmission on the second hop.

In this embodiment of the present invention, in a self-backhaul loop of an IAB network, in a case that the first IAB node for scheduling the first hop determines pre-scheduling information between the first hop and the second hop, a parent IAB node of the first IAB node, that is, the second IAB node, may send the activation signaling to the first IAB node so that the first IAB node activates the multiplexing scheduling between the first hop and the second hop based on the activation signaling. This not only enriches manners of activating multiplexing scheduling across hops in the IAB network, but also helps determine interference on reception of the first IAB node. In this way, scheduling parameters can be accurately determined to further accurately determine a power distribution status on IAB nodes, thereby improving adaptive performance of a radio backhaul link, reducing transmission latency, and improving spectrum efficiency.

Optionally, before step 201, the multiplexing scheduling method for IAB network according to this embodiment of the present invention may further include: sending pre-scheduling information to the first IAB node, where the pre-scheduling information is used to configure the first IAB node to perform multiplexing scheduling between the first hop and the second hop.

Optionally, the pre-scheduling information may include at least multiplexing resource information and a multiplexing manner.

Optionally, the multiplexing resource information includes at least one of the following: a time length for using multiplexing scheduling; a frequency range for using multiplexing scheduling; and a starting time point of multiplexing scheduling.

Optionally, in the multiplexing scheduling method for IAB network according to this embodiment of the present invention, the pre-scheduling information may further include power control information. The power control information may include a power offset, a maximum power of an MT of the first IAB node, a maximum power of a DU of the first IAB node, and the like, which helps accurately determine power distribution on the IAB node.

Optionally, the multiplexing manner may include one of the following (1) to (6).
(1) Spatial division multiplexing-based transmit SDM TX multiplexing. That is, both Hop1 DLTX (that is, DLTX on the first hop) and Hop2 ULTX (that is, ULTX on the second hop) are available. In this case, power distribution of the first IAB node between two hops is considered for scheduling of two IAB nodes.
(2) Spatial division multiplexing-based receive SDM RX multiplexing. That is, both Hop1 ULRX and Hop2 DLRX are available. In this case, interference of the first IAB node between two hops is considered for scheduling of two IAB nodes.
(3) Frequency division multiplexing-based transmit FDM TX multiplexing. That is, one part of frequency is used for Hop1 DLTX and the other part of frequency is used for Hop2 ULTX. In this case, frequency distribution between two hops is considered for scheduling of two IAB nodes.
(4) Frequency division multiplexing-based receive FDM RX multiplexing. That is, one part of frequency is used for Hop1 ULRX and the other part of frequency is used for Hop2 DLRX. In this case, frequency distribution between two hops is considered for scheduling of two IAB nodes.
(5) Uplink transmit and receive multiplexing based on co-frequency co-time full duplex CCFD, such as MPTR UL. That is, both Hop1 ULRX and Hop2 ULTX are available. In this case, interference of Hop2 ULTX on Hop1 ULRX is considered for scheduling of two IAB nodes.
(6) Downlink transmit and receive multiplexing based on co-frequency co-time full duplex CCFD, such as MPTR DL. That is, both Hop1 DLTX and Hop2 DL RX are available. In this case, interference of Hop1 DLTX on Hop2 ULRX is considered for scheduling of two IAB nodes.

Optionally, the multiplexing scheduling method for IAB network according to this embodiment of the present invention may further include: performing multiplexing scheduling between the first hop and the second hop based on the pre-scheduling information.

The pre-scheduling information may be configured by a centralized unit CU, in addition to the second IAB node. Specifically, the pre-scheduling information may be carried based on RRC signaling or F1AP signaling. In other words, the second IAB node may schedule data transmission on the second hop on a preconfigured time-frequency resource in a configured multiplexing manner between a previous hop and a next hop (that is, the first hop and the second hop). The second IAB node automatically activates the multiplexing scheduling on the preconfigured time-frequency resource or activates the multiplexing scheduling by using a PDCCH, MAC CE, or BAP control PDU.

Optionally, in the multiplexing scheduling method for IAB network according to this embodiment of the present invention, the activation signaling and pre-scheduling information are carried by one of the following: a PDCCH, a MAC CE, and a BAP control PDU.

Optionally, in the specific embodiment 1, if multiplexing resource information in the pre-scheduling information includes a starting time point of multiplexing scheduling, the starting time point of multiplexing scheduling is determined based on one of the following (1) to (3):
(1) A receiving time of a PDCCH, a MAC CE, or a BAP control PDU.

In other words, the starting time point of multiplexing scheduling corresponds to the receiving time of the PDCCH, the MAC CE, or the BAP control PDU, and optionally, corresponds to a starting or ending time point of a slot (Slot) in which the PDCCH, MAC CE, or BAP control PDU is located.

For example, referring to FIG. 3, multiplexing scheduling between the first hop and the second hop takes effect in X slots after PDCCH reception, that is, multiplexing scheduling starts at a time that is X slots after PDCCH reception.

(2) A sending time of an acknowledgement signal corresponding to reception of the PDCCH, the MAC CE, or the BAP control PDU.

In other words, the starting time point of multiplexing scheduling corresponds to the sending time of an acknowledgement signal (ACK) corresponding to reception of the PDCCH, MAC CE, or BAP control PDU, and optionally, corresponds to a ending time point of a slot in which the sending time of the acknowledgement signal is located.

For example, referring to FIG. 4, multiplexing scheduling between the first hop and the second hop takes effect in X slots after sending of the acknowledgement signal, that is, multiplexing scheduling starts at a time that is X slots after the sending time of the acknowledgement signal.

(3) Indication information carried by the PDCCH, the MAC CE, or the BAP control PDU.

Optionally, the starting time point of multiplexing scheduling is determined based on indication displayed on the PDCCH, MAC CE, or BAP control PDU.

For example, the multiplexing scheduling based on the indication of the PDCCH is activated in X slots after PDCCH reception.

Optionally, the multiplexing scheduling method for IAB network according to this embodiment of the present invention may further include one of the following steps shown in (1) and (2).
(1) Send deactivation signaling to the first IAB node, where the deactivation signaling is used to indicate deactivating the multiplexing scheduling.

Optionally, the deactivation signaling may be carried by one of the following: a PDCCH, a MAC CE, and a BAP control PDU.

(2) Send, to the first IAB node, target scheduling information of the second IAB node on the second hop, where the target scheduling information is used by the first IAB node to determine whether to deactivate the multiplexing scheduling.

Optionally, the multiplexing scheduling method for IAB network in this embodiment of the present invention may further include an operation of deactivating the multiplexing scheduling between the first hop and the second hop. After the multiplexing scheduling is deactivated, multiplexing scheduling is no longer performed for the first IAB node and the second IAB node.

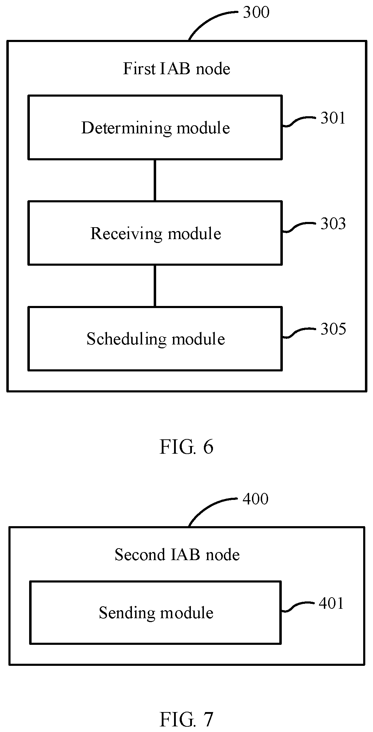

Referring to FIG. 6, an embodiment of the present invention provides a first IAB node 300. The first IAB node 300 includes a determining module 301, a receiving module 303, and a scheduling module 305.

The determining module 301 is configured to determine pre-scheduling information between a first hop and a second hop. The receiving module 303 is configured to receive activation signaling sent by a second IAB node. The scheduling module 305 is configured to, after activating multiplexing scheduling between the first hop and the second hop based on the activation signaling, perform multiplexing scheduling based on the pre-scheduling information, where the first IAB node is used to schedule data transmission on the first hop, and the second IAB node is a parent IAB node of the first IAB node and is used to schedule data transmission on the second hop.

Optionally, in the first IAB node 300 according to this embodiment of the present invention, the determining module 301 may be configured to: obtain the pre-scheduling information determined by the second IAB node.

Optionally, in the first IAB node 300 according to this embodiment of the present invention, the pre-scheduling information is carried by one of the following: a PDCCH, a MAC CE, and a BAP control PDU.

Optionally, in the first IAB node 300 according to this embodiment of the present invention, the determining module 301 may be configured to: obtain the pre-scheduling information configured by a centralized unit CU.

Optionally, in the first IAB node 300 according to this embodiment of the present invention, the pre-scheduling information is carried by one of the following: radio resource control RRC signaling or F1AP signaling.

Optionally, in the first IAB node 300 according to this embodiment of the present invention, the pre-scheduling information includes multiplexing resource information and a multiplexing manner.

Optionally, in the first IAB node 300 according to this embodiment of the present invention, the multiplexing resource information includes at least one of the following: a time length for using multiplexing scheduling; a frequency range for using multiplexing scheduling; and a starting time point of multiplexing scheduling.

Optionally, in the first IAB node 300 according to this embodiment of the present invention, in a case that the multiplexing resource information includes the starting time point of multiplexing scheduling, the starting time point of multiplexing scheduling is determined based on one of the following: a receiving time of a PDCCH, a MAC CE, or a BAP control PDU; a sending time of an acknowledgement signal corresponding to reception of the PDCCH, the MAC CE, or the BAP control PDU; and; and indication information carried by the PDCCH, the MAC CE, or the BAP control PDU.

Optionally, in the first IAB node 300 according to this embodiment of the present invention, the multiplexing manner includes one of the following: transmit or receive multiplexing based on spatial division multiplexing SDM; transmit or receive multiplexing based on frequency division multiplexing FDM; and transmit or receive multiplexing based on co-frequency co-time full duplex CCFD.

Optionally, in the first IAB node 300 according to this embodiment of the present invention, the pre-scheduling information further includes power control information.

Optionally, in the first IAB node 300 according to this embodiment of the present invention, the activation signaling is carried by one of the following: a PDCCH, a MAC CE, and a BAP control PDU.

Optionally, in the first IAB node 300 according to this embodiment of the present invention, the receiving module 303 may be further configured to: receive deactivation signaling sent by the second IAB node, where the deactivation signaling is used to indicate deactivating the multiplexing scheduling.

Optionally, in the first IAB node 300 according to this embodiment of the present invention, the deactivation signaling is carried by one of the following: a PDCCH, a MAC CE, and a BAP control PDU.

Optionally, the first IAB node 300 according to this embodiment of the present invention may further include a detection module, configured to determine whether to deactivate the multiplexing scheduling based on received target scheduling information of the second IAB node on the second hop.

Optionally, in the first IAB node 300 according to this embodiment of the present invention, the multiplexing scheduling is deactivated after bandwidth part BWP switching.

It can be understood that the first IAB node 300 according to this embodiment of the present invention can implement the multiplexing scheduling method for IAB network executed by the first IAB node 300. Descriptions about the multiplexing scheduling method for IAB network are all applicable to the first IAB node 300. Details are not described again herein.

In this embodiment of the present invention, in a self-backhaul loop of an IAB network, in a case that the first IAB node for scheduling the first hop determines the pre-scheduling information between the first hop and the second hop, the first IAB node may perform multiplexing scheduling between the first hop and the second hop based on the activation signaling received from its parent IAB node, that is, the second IAB node. The first IAB node may perform multiplexing scheduling based on the pre-scheduling information. This not only enriches manners of activating multiplexing scheduling across hops in the IAB network, but also helps determine interference on reception of the first IAB node. In this way, scheduling parameters can be accurately determined to further accurately determine a power distribution status on IAB nodes, thereby improving adaptive performance of a radio backhaul link, reducing transmission latency, and improving spectrum efficiency.

Referring to FIG. 7, an embodiment of the present invention provides a second IAB node 400. The second IAB node 400 includes: a sending module 401, configured to send activation signaling to a first IAB node, where the activation signaling is used to activate the first IAB node to activate multiplexing scheduling between a first hop and a second hop, the first IAB node is used to schedule data transmission on the first hop, and the second IAB node is a parent IAB node of the first IAB node and is used to schedule data transmission on the second hop.

Optionally, in the second IAB node 400 according to this embodiment of the present invention, the sending module 401 may be further configured to: before sending the activation signaling to the first IAB node, send pre-scheduling information to the first IAB node, where the pre-scheduling information is used to configure the first IAB node to perform multiplexing scheduling between the first hop and the second hop.

Optionally, in the second IAB node 400 according to this embodiment of the present invention, the activation signaling and the pre-scheduling information are carried by one of the following: a PDCCH, a MAC CE, and a BAP control PDU.

Optionally, in the second IAB node 400 according to this embodiment of the present invention, the sending module 401 may be further configured to: send deactivation signaling to the first IAB node, where the deactivation signaling is used to indicate deactivating the multiplexing scheduling; or send, to the first IAB node, target scheduling information of the second IAB node on the second hop, where the target scheduling information is used by the first IAB node to determine whether to deactivate the multiplexing scheduling.

Optionally, in the second IAB node 400 according to this embodiment of the present invention, the deactivation signaling is carried by one of the following: a PDCCH, a MAC CE, and a BAP control PDU.

It can be understood that the second IAB node 400 according to this embodiment of the present invention can implement the multiplexing scheduling method for IAB network executed by the second IAB node 400. Descriptions about the multiplexing scheduling method for IAB network are all applicable to the second IAB node 400. Details are not described again herein.

In this embodiment of the present invention, in a self-backhaul loop of an IAB network, in a case that the first IAB node for scheduling the first hop determines pre-scheduling information between the first hop and the second hop, a parent IAB node of the first IAB node, that is, the second IAB node, may send the activation signaling to the first IAB node so that the first IAB node activates the multiplexing scheduling between the first hop and the second hop based on the activation signaling. This not only enriches manners of activating multiplexing scheduling across hops in the IAB network, but also helps determine interference on reception of the first IAB node. In this way, scheduling parameters can be accurately determined to further accurately determine a power distribution status on IAB nodes, thereby improving adaptive performance of a radio backhaul link, reducing transmission latency, and improving spectrum efficiency.

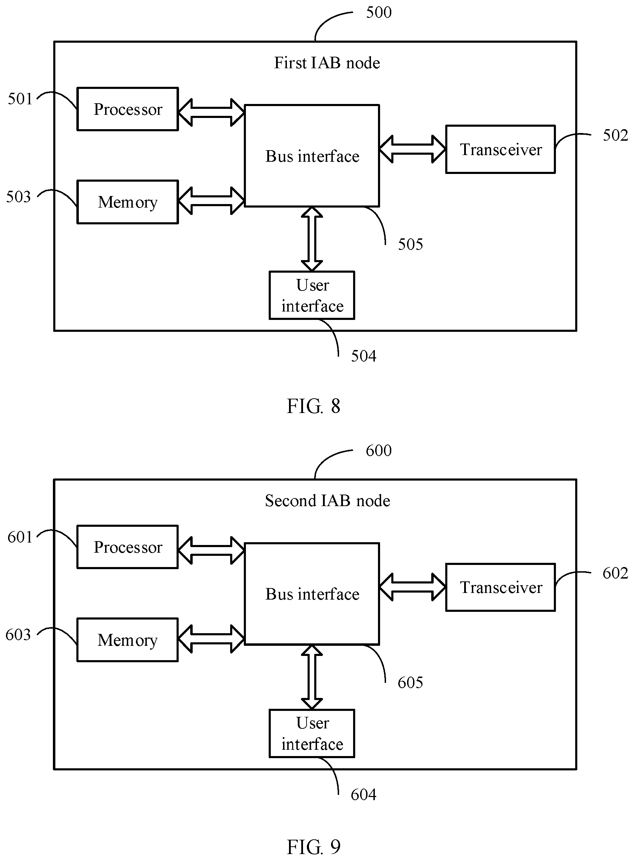

Referring to FIG. 8, FIG. 8 is a structural diagram of a first IAB node according to an embodiment of the present invention. The first IAB node is capable of implementing details of the multiplexing scheduling method for IAB network in the foregoing embodiments, with a same effect achieved. As shown in FIG. 8, the first IAB node 500 includes a processor 501, a transceiver 502, a memory 503, a user interface 504, and a bus interface 505. In this embodiment of the present invention, the first IAB node 500 further includes a computer program stored in the memory 503 and capable of running on the processor 501. When the computer program is executed by the processor 501, the following steps are implemented: determining pre-scheduling information between a first hop and a second hop; receiving activation signaling sent by a second IAB node; and after activating multiplexing scheduling between the first hop and the second hop based on the activation signaling, performing multiplexing scheduling based on the pre-scheduling information, where the first IAB node is used to schedule data transmission on the first hop, and the second IAB node is a parent IAB node of the first IAB node and is used to schedule data transmission on the second hop.

In FIG. 8, a bus architecture may include any quantity of interconnected buses and bridges, and specifically connect together various circuits of one or more processors represented by the processor 501 and a memory represented by the memory 503. The bus architecture may further interconnect various other circuits such as a peripheral device, a voltage regulator, and a power management circuit. These are all well known in the art, and therefore are not further described in this specification. The bus interface 505 provides an interface. The transceiver 502 may be a plurality of components, including a transmitter and a receiver, and provides units for communicating with a variety of other apparatuses on a transmission medium. For different user equipment, the user interface 504 may also be an interface capable of externally or internally connecting a required device, and the connected device includes but is not limited to a keypad, a display, a speaker, a microphone, a joystick, and the like.

The processor 501 is responsible for management of the bus architecture and general processing, and the memory 503 may store data for use by the processor 501 when the processor 501 performs an operation.

In this embodiment of the present invention, in a self-backhaul loop of an IAB network, in a case that the first IAB node for scheduling the first hop determines the pre-scheduling information between the first hop and the second hop, the first IAB node may perform multiplexing scheduling between the first hop and the second hop based on the activation signaling received from its parent IAB node, that is, the second IAB node. The first IAB node may perform multiplexing scheduling based on the pre-scheduling information. This not only enriches manners of activating multiplexing scheduling across hops in the IAB network, but also helps determine interference on reception of the first IAB node. In this way, scheduling parameters can be accurately determined to further accurately determine a power distribution status on IAB nodes, thereby improving adaptive performance of a radio backhaul link, reducing transmission latency, and improving spectrum efficiency.

Referring to FIG. 9, FIG. 9 is a structural diagram of a second IAB node according to an embodiment of the present invention. The first IAB node is capable of implementing details of the multiplexing scheduling method for IAB network in the foregoing embodiments, with a same effect achieved. As shown in FIG. 9, the second IAB node 600 includes a processor 601, a transceiver 602, a memory 603, a user interface 604, and a bus interface 605.

In this embodiment of the present invention, the second IAB node 600 further includes a computer program stored in the memory 603 and capable of running on the processor 601. When the computer program is executed by the processor 601, the following steps are implemented: sending activation signaling to a first IAB node, where the activation signaling is used to activate the first IAB node to activate multiplexing scheduling between a first hop and a second hop, the first IAB node is used to schedule data transmission on the first hop, and the second IAB node is a parent IAB node of the first IAB node and is used to schedule data transmission on the second hop.

In FIG. 9, a bus architecture may include any quantity of interconnected buses and bridges, and specifically connect together various circuits of one or more processors represented by the processor 601 and a memory represented by the memory 603. The bus architecture may further interconnect various other circuits such as a peripheral device, a voltage regulator, and a power management circuit. These are all well known in the art, and therefore are not further described in this specification. The bus interface 605 provides an interface. The transceiver 602 may be a plurality of components, including a transmitter and a receiver, and provides units for communicating with a variety of other apparatuses on a transmission medium. For different user equipment, the user interface 604 may also be an interface capable of externally or internally connecting a required device, and the connected device includes but is not limited to a keypad, a display, a speaker, a microphone, a joystick, and the like.

The processor 601 is responsible for management of the bus architecture and general processing, and the memory 603 may store data for use by the processor 601 when the processor 601 performs an operation.

In this embodiment of the present invention, in a self-backhaul loop of an IAB network, in a case that the first IAB node for scheduling the first hop determines pre-scheduling information between the first hop and the second hop, a parent IAB node of the first IAB node, that is, the second IAB node, may send the activation signaling to the first IAB node so that the first IAB node activates the multiplexing scheduling between the first hop and the second hop based on the activation signaling. This not only enriches manners of activating multiplexing scheduling across hops in the IAB network, but also helps determine interference on reception of the first IAB node. In this way, scheduling parameters can be accurately determined to further accurately determine a power distribution status on IAB nodes, thereby improving adaptive performance of a radio backhaul link, reducing transmission latency, and improving spectrum efficiency.

Preferably, an embodiment of the present invention further provides a first IAB node, including a processor, a memory, and a computer program stored in the memory and capable of running on the processor. When the computer program is executed by the processor, the processes of the multiplexing scheduling method for IAB network in the foregoing corresponding embodiments are implemented, with the same technical effects achieved. To avoid repetition, details are not described again herein.

An embodiment of the present invention further provides a computer-readable storage medium that stores a computer program. When the computer program is executed by a processor, the processes of the multiplexing scheduling method for IAB network applied to a first IAB node in the foregoing embodiments are implemented, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

Preferably, an embodiment of the present invention further provides a second IAB node, including a processor, a memory, and a computer program stored in the memory and capable of running on the processor. When the computer program is executed by the processor, the processes of the multiplexing scheduling method for IAB network in the foregoing corresponding embodiments are implemented, with the same technical effects achieved. To avoid repetition, details are not described again herein.

An embodiment of the present invention further provides a computer-readable storage medium that stores a computer program. When the computer program is executed by a processor, the processes of the multiplexing scheduling method for IAB network applied to a second IAB node in the foregoing embodiments are implemented, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, persons skilled in the art can clearly understand that the method in the foregoing embodiments may be implemented by software in addition to a necessary universal hardware platform or by hardware only. In most cases, the former is a more preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

## Claims

1. A multiplexing scheduling method for IAB network applied to a first IAB node, **characterized in that** the method comprises:
determining (101) pre-scheduling information between a first hop and a second hop;
receiving (103) activation signaling sent by a second IAB node; and
after activating multiplexing scheduling between the first hop and the second hop based on the activation signaling, performing (105) multiplexing scheduling based on the pre-scheduling information, wherein the first IAB node is used to schedule data transmission on the first hop, and the second IAB node is a parent IAB node of the first IAB node and is used to schedule data transmission on the second hop;
**characterized in that** the pre-scheduling information comprises multiplexing resource information; and
the multiplexing resource information comprises at least one of the following:
a time length for using multiplexing scheduling;
a frequency range for using multiplexing scheduling; and
a starting time point of multiplexing scheduling,
wherein in a case that the multiplexing resource information comprises the starting time point of multiplexing scheduling, the starting time point of multiplexing scheduling is determined based on one of the following:
a receiving time of a PDCCH, a MAC CE, or a BAP control PDU;
a sending time of an acknowledgement signal corresponding to reception of the PDCCH, the MAC CE, or the BAP control PDU; and
indication information carried by the PDCCH, the MAC CE, or the BAP control PDU.

2. The method according to claim 1, wherein the determining (101) pre-scheduling information between a first hop and a second hop comprises:
obtaining the pre-scheduling information determined by the second IAB node.

3. The method according to claim 2, wherein the pre-scheduling information is carried by one of the following:
a physical downlink control channel, PDCCH;
a medium access control control element, MAC CE; and
a backhaul adaptation protocol, BAP, control protocol data unit, PDU.

4. The method according to claim 1, wherein the determining (101) pre-scheduling information between a first hop and a second hop comprises:
obtaining the pre-scheduling information configured by a centralized unit, CU,
wherein the pre-scheduling information is carried by one of the following: radio resource control, RRC, signaling or F1AP signaling.

5. The method according to claim 1, wherein the pre-scheduling information further comprises a multiplexing manner.

6. The method according to claim 5, wherein the multiplexing manner comprises one of the following:
transmit or receive multiplexing based on spatial division multiplexing, SDM;
transmit or receive multiplexing based on frequency division multiplexing FDM; and
transmit and receive multiplexing based on co-frequency co-time full duplex, CCFD, or
wherein the pre-scheduling information further comprises power control information.

7. The method according to claim 1, wherein the activation signaling is carried by one of the following:
a physical downlink control channel, PDCCH;
a medium access control control element, MAC CE; and
a BAP control PDU.

8. The method according to claim 1, wherein the method further comprises:
receiving deactivation signaling sent by the second IAB node, wherein the deactivation signaling is used to indicate deactivating the multiplexing scheduling,
wherein the deactivation signaling is carried by one of the following:
a physical downlink control channel, PDCCH;
a medium access control control element, MAC CE; and
a BAP control PDU.

9. The method according to claim 1, wherein the method further comprises:
receiving target scheduling information of the second IAB node on the second hop from the second IAB node,
determining, based on received target scheduling information of the second IAB node on the second hop, whether to deactivate the multiplexing scheduling, or
wherein the multiplexing scheduling is deactivated after bandwidth part, BWP, switching.

10. A multiplexing scheduling method for IAB network applied to a second IAB node, **characterized in that** the method comprises:
sending (201) activation signaling to a first IAB node, wherein the activation signaling is used by the first IAB node to activate multiplexing scheduling between a first hop and a second hop, the first IAB node is used to schedule data transmission on the first hop, and the second IAB node is a parent IAB node of the first IAB node and is used to schedule data transmission on the second hop;
wherein before the sending (201) activation signaling to a first IAB node, the method further comprises:
sending pre-scheduling information to the first IAB node, wherein the pre-scheduling information is used to configure the first IAB node to perform multiplexing scheduling between the first hop and the second hop,
**characterized in that** the pre-scheduling information comprises multiplexing resource information; and
the multiplexing resource information comprises at least one of the following:
a time length for using multiplexing scheduling;
a frequency range for using multiplexing scheduling; and
a starting time point of multiplexing scheduling,
wherein in a case that the multiplexing resource information comprises the starting time point of multiplexing scheduling, the starting time point of multiplexing scheduling is determined based on one of the following:
a receiving time of a PDCCH, a MAC CE, or a BAP control PDU;
a sending time of an acknowledgement signal corresponding to reception of the PDCCH, the MAC CE, or the BAP control PDU; and
indication information carried by the PDCCH, the MAC CE, or the BAP control PDU.

11. The method according to claim 10, wherein the activation signaling and the pre-scheduling information are carried by one of the following:
a physical downlink control channel, PDCCH;
a medium access control control element, MAC CE; and
a BAP control PDU.

12. The method according to claim 10, wherein the method further comprises one of the following:
sending deactivation signaling to the first IAB node, wherein the deactivation signaling is used to indicate deactivating the multiplexing scheduling; or
sending, to the first IAB node, target scheduling information of the second IAB node on the second hop, wherein the target scheduling information is used by the first IAB node to determine whether to deactivate the multiplexing scheduling.

13. A first IAB node, **characterized in that** the first IAB node comprises:
a determining module (301), configured to determine pre-scheduling information between a first hop and a second hop;
a receiving module (303), configured to receive activation signaling sent by a second IAB node; and
a scheduling module (305), configured to, after activating multiplexing scheduling between the first hop and the second hop based on the activation signaling, perform multiplexing scheduling based on the pre-scheduling information, wherein the first IAB node is used to schedule data transmission on the first hop, and the second IAB node is a parent IAB node of the first IAB node and is used to schedule data transmission on the second hop;
**characterized in that** the pre-scheduling information comprises multiplexing resource information; and
the multiplexing resource information comprises at least one of the following:
a time length for using multiplexing scheduling;
a frequency range for using multiplexing scheduling; and
a starting time point of multiplexing scheduling,
wherein in a case that the multiplexing resource information comprises the starting time point of multiplexing scheduling, the starting time point of multiplexing scheduling is determined based on one of the following:
a receiving time of a PDCCH, a MAC CE, or a BAP control PDU;
a sending time of an acknowledgement signal corresponding to reception of the PDCCH, the MAC CE, or the BAP control PDU; and
indication information carried by the PDCCH, the MAC CE, or the BAP control PDU.

14. A second IAB node, **characterized in that** the second IAB node comprises:
a sending module (401), configured to send activation signaling to a first IAB node, wherein the activation signaling is used by the first IAB node to activate multiplexing scheduling between a first hop and a second hop, the first IAB node is used to schedule data transmission on the first hop, and the second IAB node is a parent IAB node of the first IAB node and is used to schedule data transmission on the second hop;
the sending module (401) is further configured to: before sending the activation signaling to the first IAB node, send pre-scheduling information to the first IAB node, wherein the pre-scheduling information is used to configure the first IAB node to perform multiplexing scheduling between the first hop and the second hop;
**characterized in that** the pre-scheduling information comprises multiplexing resource information; and
the multiplexing resource information comprises at least one of the following:
a time length for using multiplexing scheduling;
a frequency range for using multiplexing scheduling; and
a starting time point of multiplexing scheduling,
wherein in a case that the multiplexing resource information comprises the starting time point of multiplexing scheduling, the starting time point of multiplexing scheduling is determined based on one of the following:
a receiving time of a PDCCH, a MAC CE, or a BAP control PDU;
a sending time of an acknowledgement signal corresponding to reception of the PDCCH, the MAC CE, or the BAP control PDU; and
indication information carried by the PDCCH, the MAC CE, or the BAP control PDU.

## Patentansprüche

1. Multiplexing-Planungsverfahren für IAB-Netz, das auf einen ersten IAB-Knoten angewendet wird, **dadurch gekennzeichnet, dass** das Verfahren Folgendes umfasst:
Bestimmen (101) von Vorplanungsinformationen zwischen einem ersten Hop und einem zweiten Hop;
Empfangen (103) von Aktivierungssignalen, die von einem zweiten IAB-Knoten gesendet werden; und
nach Aktivieren der Multiplexing-Planung zwischen dem ersten Hop und dem zweiten Hop basierend auf der Aktivierungssignalisierung, Durchführen (105) der Multiplexing-Planung basierend auf den Vorplanungsinformationen, wobei der erste IAB-Knoten verwendet wird, um eine Datenübertragung auf dem ersten Hop zu planen, und der zweite IAB-Knoten ein übergeordneter IAB-Knoten des ersten IAB-Knotens ist und verwendet wird, um eine Datenübertragung auf dem zweiten Hop zu planen;
**dadurch gekennzeichnet, dass**
die Vorplanungsinformationen Multiplexing-Ressourceninformationen umfassen; und
die Multiplexing-Ressourceninformationen mindestens eines der Folgenden umfassen:
eine Zeitlänge zum Verwenden von Multiplexing-Planung;
einen Frequenzbereich zum Verwenden von Multiplexing-Scheduling; und
ein Startzeitpunkt für Multiplexing-Planung,
wobei in einem Fall, in dem die Multiplexing-Ressourceninformationen den Startzeitpunkt der Multiplexing-Planung umfassen, der Startzeitpunkt der Multiplexing-Planung basierend auf einem der Folgenden bestimmt wird:
eine Empfangszeit eines PDCCH, eines MAC CE oder einer BAP-Steuerungs-PDU;
eine Sendezeit eines Bestätigungssignals, das einem Empfang des PDCCH, des MAC CE oder der BAP-Steuerungs-PDU entspricht; und
Indikationsinformationen, die von dem PDCCH, dem MAC CE oder der BAP-Steuerungs-PDU übertragen werden.

2. Verfahren nach Anspruch 1, wobei das Bestimmen (101) von Vorplanungsinformationen zwischen einem ersten Hop und einem zweiten Hop Folgendes umfasst:
Erlangen der Vorplanungsinformationen, die von dem zweiten IAB-Knoten bestimmt werden.

3. Verfahren nach Anspruch 2, wobei die Vorplanungsinformationen von einem der Folgenden getragen werden:
einem physikalischen Downlink-Steuerkanal, PDCCH;
einem Steuerelement für Medienzugriffskontrolle, MAC CE; und
eine Steuerprotokolldateneinheit, PDU, für Backhaul-Adaptionsprotokoll, BAP.

4. Verfahren nach Anspruch 1, wobei das Bestimmen (101) von Vorplanungsinformationen zwischen einem ersten Hop und einem zweiten Hop Folgendes umfasst:
Erlangen der Vorplanungsinformationen, CU, die von einer zentralen Einheit konfiguriert werden,
wobei die Vorplanungsinformationen durch eine der Folgenden Informationen übertragen werden: Funkressourcensteuerung, RRC, Signalisierung oder F1AP-Signalisierung.

5. Verfahren nach Anspruch 1, wobei die Vorplanungsinformationen ferner eine Multiplexing-Art umfassen.

6. Verfahren nach Anspruch 5, wobei die ersten Informationen eines der Folgenden umfassen:
Sende- oder Empfangsmultiplexing basierend auf Raummultiplexing, SDM;
Sende- oder Empfangsmultiplexing basierend auf Frequenzmultiplexing FDM; und
Sende- und Empfangsmultiplexing basierend auf Gleichfrequenz-Co-Time-Vollduplex, CCFD, oder wobei die Vorplanungsinformationen ferner
Leistungssteuerungsinformationen umfassen.

7. Verfahren nach Anspruch 1, wobei die Aktivierungssignalisierung durch eines der Folgenden durchgeführt wird:
einem physikalischen Downlink-Steuerkanal, PDCCH;
einem Steuerelement für Medienzugriffskontrolle, MAC CE; und
einer BAP-Steuerungs-PDU.

8. Verfahren nach Anspruch 1, wobei das Verfahren ferner Folgendes umfasst:
Empfangen einer Deaktivierungssignalisierung, die von dem zweiten IAB-Knoten gesendet wird, wobei die Deaktivierungssignalisierung verwendet wird, um die Deaktivierung der Multiplexing-Planung anzugeben,
wobei die Deaktivierungssignalisierung von einem der Folgenden getragen wird:
einem physikalischen Downlink-Steuerkanal, PDCCH;
einem Steuerelement für Medienzugriffskontrolle, MAC CE; und
einer BAP-Steuerungs-PDU.

9. Verfahren nach Anspruch 1, wobei das Verfahren ferner Folgendes umfasst:
Empfangen von Zielplanungsinformationen des zweiten IAB-Knotens auf dem zweiten Hop von dem zweiten IAB-Knoten,
Bestimmen, basierend auf den empfangenen Zielplanungsinformationen des zweiten IAB-Knotens auf dem zweiten Hop, ob die Multiplexing-Planung deaktiviert werden soll, oder
wobei die Multiplexing-Planung nach Umschalten des Bandbreitenteils, BWP, deaktiviert wird.

10. Multiplexing-Planungsverfahren für ein IAB-Netz, das auf einen zweiten IAB-Knoten angewendet wird, **dadurch gekennzeichnet, dass** das Verfahren Folgendes umfasst:
Senden (201) einer Aktivierungssignalisierung an einen ersten IAB-Knoten, wobei die Aktivierungssignalisierung von dem ersten IAB-Knoten verwendet wird, um die Multiplexing-Planung zwischen einem ersten Hop und einem zweiten Hop zu aktivieren, der erste IAB-Knoten verwendet wird, um die Datenübertragung auf dem ersten Hop zu planen, und der zweite IAB-Knoten ein übergeordneter IAB-Knoten des ersten IAB-Knotens ist und verwendet wird, um die Datenübertragung auf dem zweiten Hop zu planen;
wobei das Verfahren vor dem Senden (201) der Aktivierungssignalisierung an einen ersten IAB-Knoten ferner Folgendes umfasst:
Senden von Vorplanungsinformationen an den ersten IAB-Knoten, wobei die Vorplanungsinformationen verwendet werden, um den ersten IAB-Knoten zu konfigurieren, um eine Multiplex-Planung zwischen dem ersten Hop und dem zweiten Hop durchzuführen,
**dadurch gekennzeichnet, dass**
die Vorplanungsinformationen Multiplexing-Ressourceninformationen umfassen; und
die Multiplexing-Ressourceninformationen mindestens eines der Folgenden umfassen:
eine Zeitlänge zum Verwenden von Multiplexing-Planung;
einen Frequenzbereich zum Verwenden von Multiplexing-Scheduling; und
ein Startzeitpunkt für Multiplexing-Planung,
wobei in einem Fall, in dem die Multiplexing-Ressourceninformationen den Startzeitpunkt der Multiplexing-Planung umfassen, der Startzeitpunkt der Multiplexing-Planung basierend auf einem der Folgenden bestimmt wird:
eine Empfangszeit eines PDCCH, eines MAC CE oder einer BAP-Steuerungs-PDU;
eine Sendezeit eines Bestätigungssignals, das einem Empfang des PDCCH, des MAC CE oder der BAP-Steuerungs-PDU entspricht; und
Indikationsinformationen, die von dem PDCCH, dem MAC CE oder der BAP-Steuerungs-PDU übertragen werden.

11. Verfahren nach Anspruch 10, wobei die Aktivierungssignalisierung und die Vorplanungsinformationen von einem der Folgenden getragen werden:
einem physikalischen Downlink-Steuerkanal, PDCCH;
einem Steuerelement für Medienzugriffskontrolle, MAC CE; und
einer BAP-Steuerungs-PDU.

12. Verfahren nach Anspruch 10, wobei die ersten Informationen eines der Folgenden umfassen:
Senden einer Deaktivierungssignalisierung an den ersten IAB-Knoten, wobei die Deaktivierungssignalisierung verwendet wird, um die Deaktivierung der Multiplexing-Planung anzugeben; oder
Senden von Zielplanungsinformationen des zweiten IAB-Knotens auf dem zweiten Hop an den ersten IAB-Knoten, wobei die Zielplanungsinformationen von dem ersten IAB-Knoten verwendet werden, um zu bestimmen, ob die Multiplexing-Planung deaktiviert werden soll.

13. Erster IAB-Knoten, **dadurch gekennzeichnet, dass** der erste IAB-Knoten Folgendes umfasst:
ein Bestimmungsmodul (301), das konfiguriert ist, um Vorplanungsinformationen zwischen einem ersten Hop und einem zweiten Hop zu bestimmen;
ein Empfangsmodul (303), das konfiguriert ist, um Aktivierungssignale zu empfangen, die von einem zweiten IAB-Knoten gesendet werden; und
ein Planungsmodul (305), das konfiguriert ist, um nach Aktivieren der Multiplex-Planung zwischen dem ersten Hop und dem zweiten Hop basierend auf der Aktivierungssignalisierung eine Multiplex-Planung basierend auf den Vorplanungsinformationen durchzuführen, wobei der erste IAB-Knoten verwendet wird, um eine Datenübertragung auf dem ersten Hop zu planen, und der zweite IAB-Knoten ein übergeordneter IAB-Knoten des ersten IAB-Knotens ist und verwendet wird, um eine Datenübertragung auf dem zweiten Hop zu planen;
**dadurch gekennzeichnet, dass**
die Vorplanungsinformationen Multiplexing-Ressourceninformationen umfassen; und
die Multiplexing-Ressourceninformationen mindestens eines der Folgenden umfassen:
eine Zeitlänge zum Verwenden von Multiplexing-Planung;
einen Frequenzbereich zum Verwenden von Multiplexing-Scheduling; und
ein Startzeitpunkt für Multiplexing-Planung,
wobei in einem Fall, in dem die Multiplexing-Ressourceninformationen den Startzeitpunkt der Multiplexing-Planung umfassen, der Startzeitpunkt der Multiplexing-Planung basierend auf einem der Folgenden bestimmt wird:
eine Empfangszeit eines PDCCH, eines MAC CE oder einer BAP-Steuerungs-PDU;
eine Sendezeit eines Bestätigungssignals, das einem Empfang des PDCCH, des MAC CE oder der BAP-Steuerungs-PDU entspricht; und
Indikationsinformationen, die von dem PDCCH, dem MAC CE oder der BAP-Steuerungs-PDU übertragen werden.

14. Zweiter IAB-Knoten, **dadurch gekennzeichnet, dass** der zweite IAB-Knoten Folgendes umfasst:
ein Sendemodul (401), das konfiguriert ist, um eine Aktivierungssignalisierung an einen ersten IAB-Knoten zu senden, wobei die Aktivierungssignalisierung von dem ersten IAB-Knoten verwendet wird, um die Multiplexing-Planung zwischen einem ersten Hop und einem zweiten Hop zu aktivieren, der erste IAB-Knoten verwendet wird, um die Datenübertragung auf dem ersten Hop zu planen, und der zweite IAB-Knoten ein übergeordneter IAB-Knoten des ersten IAB-Knotens ist und verwendet wird, um die Datenübertragung auf dem zweiten Hop zu planen;
das Sendemodul (401) ferner zu Folgendem konfiguriert ist: vor Senden der Aktivierungssignalisierung an den ersten IAB-Knoten, Senden von Vorplanungsinformationen an den ersten IAB-Knoten, wobei die Vorplanungsinformationen verwendet werden, um den ersten IAB-Knoten zu konfigurieren, um eine Multiplexing-Planung zwischen dem ersten Hop und dem zweiten Hop durchzuführen;
**dadurch gekennzeichnet, dass**
die Vorplanungsinformationen Multiplexing-Ressourceninformationen umfassen; und
die Multiplexing-Ressourceninformationen mindestens eines der Folgenden umfassen:
eine Zeitlänge zum Verwenden von Multiplexing-Planung;
einen Frequenzbereich zum Verwenden von Multiplexing-Scheduling; und
ein Startzeitpunkt für Multiplexing-Planung,
wobei in einem Fall, in dem die Multiplexing-Ressourceninformationen den Startzeitpunkt der Multiplexing-Planung umfassen, der Startzeitpunkt der Multiplexing-Planung basierend auf einem der Folgenden bestimmt wird:
eine Empfangszeit eines PDCCH, eines MAC CE oder einer BAP-Steuerungs-PDU;
eine Sendezeit eines Bestätigungssignals, das einem Empfang des PDCCH, des MAC CE oder der BAP-Steuerungs-PDU entspricht; und
Indikationsinformationen, die von dem PDCCH, dem MAC CE oder der BAP-Steuerungs-PDU übertragen werden.

## Revendications

1. Procédé de planification de multiplexage pour réseau IAB appliqué à un premier nœud IAB, **caractérisé en ce que** le procédé comprend :
la détermination (101) d'informations de préplanification entre un premier bond et un second bond ;
la réception (103) d'une signalisation d'activation envoyée par un second nœud IAB ; et
après l'activation de la planification de multiplexage entre le premier bond et le second bond sur la base de la signalisation d'activation, la réalisation (105) d'une planification de multiplexage sur la base des informations de préplanification, dans lequel le premier nœud IAB est utilisé pour planifier la transmission de données sur le premier bond, et le second nœud IAB est un nœud IAB parent du premier nœud IAB et est utilisé pour planifier la transmission de données sur le second bond ;
**caractérisé en ce que**
les informations de préplanification comprennent des informations de ressource de multiplexage ; et
les informations de ressource de multiplexage comprennent au moins l'un des éléments suivants :
une durée d'utilisation de la planification de multiplexage ;
une bande de fréquences pour l'utilisation de la planification de multiplexage ; et
un point temporel de départ de la planification de multiplexage,
dans lequel, dans un cas où les informations de ressource de multiplexage comprennent le point temporel de départ de la planification de multiplexage, le point temporel de départ de la planification de multiplexage est déterminé sur la base de l'un des éléments suivants :
l'heure de réception d'un PDCCH, d'un MAC CE ou d'un PDU de contrôle BAP ;
une heure d'envoi d'un signal d'acquittement correspondant à la réception du PDCCH, du MAC CE ou du PDU de contrôle BAP ; et
des informations d'indication transmises par le PDCCH, le MAC CE ou le PDU de contrôle BAP.

2. Procédé selon la revendication 1, dans lequel la détermination (101) d'informations de préplanification entre un premier bond et un second bond comprend :
l'obtention des informations de préplanification déterminées par le second nœud IAB.

3. Procédé selon la revendication 2, dans lequel les informations de préplanification sont transmises par l'un des éléments suivants :
un canal physique de commande de liaison descendante, PDCCH ;
un élément de contrôle du contrôle d'accès au support, MAC CE ;et
une unité de données de protocole, PDU, de contrôle de protocole d'adaptation de liaison, BAP.

4. Procédé selon la revendication 1, dans lequel la détermination (101) d'informations de préplanification entre un premier bond et un second bond comprend :
l'obtention des informations de préplanification configurées par une unité centralisée, CU,
dans lequel les informations de préplanification sont transmises par l'une des signalisations suivantes : une signalisation de contrôle des ressources radio, RRC, ou une signalisation F1AP.

5. Procédé selon la revendication 1, dans lequel les informations de préplanification comprennent en outre un mode de multiplexage.

6. Procédé selon la revendication 5, dans lequel le mode de multiplexage comprend l'un des modes suivants :
le multiplexage d'émission ou de réception fondé sur le multiplexage par répartition spatiale, SDM ;
le multiplexage d'émission ou de réception fondé sur le multiplexage par répartition en fréquence, MRF ; et
le multiplexage d'émission et de réception fondé sur le duplex intégral co-fréquence co-temporel, CCFD, ou dans lequel les informations de préplanification comprennent en outre des informations de contrôle de la puissance.

7. Procédé selon la revendication 1, dans lequel la signalisation d'activation est transmise par l'un des moyens suivants :
un canal physique de commande de liaison descendante, PDCCH ;
un élément de contrôle du contrôle d'accès au support, MAC CE ;et
un PDU de contrôle BAP.

8. Procédé selon la revendication 1, dans lequel le procédé comprend en outre :
la réception d'une signalisation de désactivation envoyée par le second nœud IAB, dans lequel la signalisation de désactivation est utilisée pour indiquer la désactivation de la planification de multiplexage,
dans lequel la signalisation de désactivation est transmise par l'un quelconque des moyens suivants :
un canal physique de commande de liaison descendante, PDCCH ;
un élément de contrôle du contrôle d'accès au support, MAC CE ;et
un PDU de contrôle BAP.

9. Procédé selon la revendication 1, dans lequel le procédé comprend en outre :
la réception d'informations de planification cibles du second nœud IAB sur le second bond du second nœud IAB,
la détermination, sur la base des informations de planification cibles reçues du second nœud IAB sur le second bond, de la désactivation ou non de la planification du multiplexage, ou
dans lequel la planification du multiplexage est désactivée après la commutation de la partie de bande passante, BWP.

10. Procédé de planification de multiplexage pour réseau IAB appliqué à un second nœud IAB, **caractérisé en ce que** le procédé comprend :
l'envoi (201) d'une signalisation d'activation à un premier nœud IAB, dans lequel la signalisation d'activation est utilisée par le premier nœud IAB pour activer la planification de multiplexage entre un premier bond et un second bond, le premier nœud IAB est utilisé pour planifier la transmission de données sur le premier bond, et le second nœud IAB est un nœud IAB parent du premier nœud IAB et est utilisé pour planifier la transmission de données sur le second bond ;
dans lequel, avant l'envoi (201) d'une signalisation d'activation à un premier nœud IAB, le procédé comprend en outre :
l'envoi d'informations de préplanification au premier nœud IAB, dans lequel les informations de préplanification sont utilisées pour configurer le premier nœud IAB afin qu'il réalise la planification de multiplexage entre le premier bond et le second bond,
**caractérisé en ce que**
les informations de préplanification comprennent des informations de ressource de multiplexage ; et
les informations de ressource de multiplexage comprennent au moins l'un des éléments suivants :
une durée d'utilisation de la planification de multiplexage ;
une bande de fréquences pour l'utilisation de la planification de multiplexage ; et
un point temporel de départ de la planification de multiplexage,
dans lequel, dans un cas où les informations de ressource de multiplexage comprennent le point temporel de départ de la planification de multiplexage, le point temporel de départ de la planification de multiplexage est déterminé sur la base de l'un des éléments suivants :
l'heure de réception d'un PDCCH, d'un MAC CE ou d'un PDU de contrôle BAP ;
une heure d'envoi d'un signal d'acquittement correspondant à la réception du PDCCH, du MAC CE ou du PDU de contrôle BAP ; et
des informations d'indication transmises par le PDCCH, le MAC CE ou le PDU de contrôle BAP.

11. Procédé selon la revendication 10, dans lequel la signalisation d'activation et les informations de préplanification sont transmises par l'un des moyens suivants :
un canal physique de commande de liaison descendante, PDCCH ;
un élément de contrôle du contrôle d'accès au support, MAC CE ;et
un PDU de contrôle BAP.

12. Procédé selon la revendication 10, dans lequel le procédé comprend en outre l'un des éléments suivants :
l'envoi d'une signalisation de désactivation au premier nœud IAB, dans lequel la signalisation de désactivation est utilisée pour indiquer la désactivation de la planification de multiplexage ; ou
l'envoi, au premier nœud IAB, d'informations de planification cibles du second nœud IAB sur le second bond, dans lequel les informations de planification cibles sont utilisées par le premier nœud IAB pour déterminer s'il faut désactiver la planification de multiplexage.

13. Premier nœud IAB, **caractérisé en ce que** le premier nœud IAB comprend :
un module de détermination (301), configuré pour déterminer des informations de préplanification entre un premier bond et un second bond ;
un module de réception (303), configuré pour recevoir une signalisation d'activation envoyée par un second nœud IAB ; et
un module de planification (305), configuré pour, après l'activation de la planification de multiplexage entre le premier bond et le second bond sur la base de la signalisation d'activation, réaliser une planification de multiplexage sur la base des informations de préplanification, dans lequel le premier nœud IAB est utilisé pour planifier la transmission de données sur le premier bond, et le second nœud IAB est un nœud IAB parent du premier nœud IAB et est utilisé pour planifier la transmission de données sur le second bond ;
**caractérisé en ce que**
les informations de préplanification comprennent des informations de ressource de multiplexage ; et
les informations de ressource de multiplexage comprennent au moins l'un des éléments suivants :
une durée d'utilisation de la planification de multiplexage ;
une bande de fréquences pour l'utilisation de la planification de multiplexage ; et
un point temporel de départ de la planification de multiplexage,
dans lequel, dans un cas où les informations de ressource de multiplexage comprennent le point temporel de départ de la planification de multiplexage, le point temporel de départ de la planification de multiplexage est déterminé sur la base de l'un des éléments suivants :
l'heure de réception d'un PDCCH, d'un MAC CE ou d'un PDU de contrôle BAP ;
une heure d'envoi d'un signal d'acquittement correspondant à la réception du PDCCH, du MAC CE ou du PDU de contrôle BAP ; et
des informations d'indication transmises par le PDCCH, le MAC CE ou le PDU de contrôle BAP.

14. Second nœud IAB, **caractérisé en ce que** le second nœud IAB comprend :
un module d'envoi (401), configuré pour envoyer une signalisation d'activation à un premier nœud IAB, dans lequel la signalisation d'activation est utilisée par le premier nœud IAB pour activer la planification de multiplexage entre un premier bond et un second bond, le premier nœud IAB est utilisé pour planifier la transmission de données sur le premier bond, et le second nœud IAB est un nœud IAB parent du premier nœud IAB et est utilisé pour planifier la transmission de données sur le second bond ;
le module d'envoi (401) est en outre configuré pour : avant l'envoi de la signalisation d'activation au premier nœud IAB, envoyer des informations de préplanification au premier nœud IAB, dans lequel les informations de préplanification sont utilisées pour configurer le premier nœud IAB afin qu'il réalise la planification de multiplexage entre le premier bond et le second bond ;
**caractérisé en ce que**
les informations de préplanification comprennent des informations de ressource de multiplexage ; et
les informations de ressource de multiplexage comprennent au moins l'un des éléments suivants :
une durée d'utilisation de la planification de multiplexage ;
une bande de fréquences pour l'utilisation de la planification de multiplexage ; et
un point temporel de départ de la planification de multiplexage,
dans lequel, dans un cas où les informations de ressource de multiplexage comprennent le point temporel de départ de la planification de multiplexage, le point temporel de départ de la planification de multiplexage est déterminé sur la base de l'un des éléments suivants :
l'heure de réception d'un PDCCH, d'un MAC CE ou d'un PDU de contrôle BAP ;
une heure d'envoi d'un signal d'acquittement correspondant à la réception du PDCCH, du MAC CE ou du PDU de contrôle BAP ; et
des informations d'indication transmises par le PDCCH, le MAC CE ou le PDU de contrôle BAP.
